(19) **Europäisches Patentamt**
**European Patent Office**
**Office européen des brevets**

(11)  **EP 2 413 485 B1**

(12)  **FASCICULE DE BREVET EUROPEEN**

(45) Date de publication et mention
de la délivrance du brevet:
**07.01.2015 Bulletin 2015/02**

(51) Int Cl.:
*H02M 5/458* (2006.01)        *H02M 1/12* (2006.01)
*H02M 7/5387* (2007.01)

(21) Numéro de dépôt: **11305988.5**

(22) Date de dépôt: **28.07.2011**

(54) **Système d'alimentation d'une charge en courant alternatif à partir d'un réseau alternatif sans présence d'un transformateur entre le réseau et le système d'alimentation, et chaîne d'entraînement comprenant un tel système**

System zur Einspeisung einer Wechselstromladung aus einem Wechselstromnetz ohne Transformator zwischen dem Netz und dem Einspeisesystem sowie ein Antrieb, der ein solches System umfasst

System for supplying an alternating current charge from an AC grid with no transformer between the grid and the supply system, and power transmission chain including such a system

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.07.2010 FR 1056278**

(43) Date de publication de la demande:
**01.02.2012 Bulletin 2012/05**

(73) Titulaire: **GE Energy Power Conversion
Technology Limited**
**Rugby**
**Warwickshire CV21 1BU (GB)**

(72) Inventeurs:
• **Flury, Guy**
**68210 Balschwiller (FR)**
• **Leleu, Emmanuel**
**70400 Frahier-et-Chatebier (FR)**

(74) Mandataire: **Serjeants LLP**
**25 The Crescent**
**King Street**
**Leicester, LE1 6RX (GB)**

(56) Documents cités:
**EP-A1- 2 202 875      EP-A2- 1 641 111
EP-A2- 2 157 683      WO-A2-2008/024410
US-A1- 2007 211 501**

**Description**

La présente invention concerne un système d'alimentation d'une charge en courant électrique alternatif à partir d'un réseau électrique alternatif, du type comprenant :

- un dispositif de liaison du réseau électrique alternatif à une masse électrique,
- un redresseur connecté au réseau électrique alternatif, sans présence d'un transformateur entre le réseau alternatif et le redresseur, le redresseur comportant des interrupteurs électroniques commandables propres à convertir le courant alternatif fourni par le réseau électrique en un courant continu délivré en sortie du redresseur,
- un dispositif de commande des interrupteurs électroniques du redresseur propre à envoyer des signaux de commande aux interrupteurs respectifs,
- un onduleur connecté en sortie du redresseur via un bus continu et propre à convertir le courant continu fourni par le redresseur en un courant alternatif délivré à la charge reliée à sa sortie, et
- un dispositif de limitation du courant de mode commun propre à circuler entre le réseau et la charge.

L'invention concerne également une chaîne d'entraînement propre à être reliée à un réseau électrique alternatif, comprenant une machine électrique et un tel système d'alimentation de la machine électrique en courant alternatif.

On connaît du document US 2007/0211501 A1 un système d'alimentation du type précité. Le système comporte un redresseur triphasé connecté à un réseau d'alimentation triphasé, un onduleur triphasé connecté en sortie du redresseur et destiné à alimenter une charge triphasée. Le réseau est relié à une masse électrique. Le redresseur et l'onduleur sont reliés entre eux par l'intermédiaire d'un bus continu, et le système comporte en outre une inductance homopolaire de limitation du courant de mode commun, l'inductance homopolaire étant agencée sur le bus continu de liaison entre le redresseur et l'onduleur. Le système d'alimentation comporte en outre deux filtres de mode commun connectés respectivement en entrée du redresseur et en sortie de l'onduleur.

Toutefois, un tel système d'alimentation nécessite la présence de deux filtres de mode commun, afin de limiter la tension homopolaire, les filtres de mode commun étant reliés entre eux par une liaison électrique de passage du courant de mode commun. La liaison de passage du courant de mode commun comporte une résistance d'amortissement. Ceci engendre des surcoûts. En outre, le dimensionnement de tels filtres de mode commun pour le filtrage des composantes de mode commun est complexe, ces filtres ayant également une influence sur des composantes de mode différentiel du système.

Le document EP 2 157 683 divulgue un système d'alimentation d'une charge en courant électrique alternatif à partir d'un réseau électrique alternatif selon le préambule de la revendication 1.

Le but de l'invention est de proposer un système d'alimentation d'une charge en courant électrique alternatif permettant de limiter la tension homopolaire, tout en n'engendrant pas de surcoûts.

A cet effet, l'invention a pour objet un système d'alimentation du type précité, caractérisé en ce que le dispositif de commande est propre à limiter la valeur absolue de la tension entre la masse électrique et une phase du courant alternatif délivré à la charge, en l'absence de surtensions dans la charge, à une première valeur limite strictement inférieure à celle de la tension du bus continu.

Suivant d'autres modes de réalisation, le système d'alimentation comprend une ou plusieurs des caractéristiques suivantes, prises isolément ou suivant toutes les combinaisons techniquement possibles :

- la première valeur limite est égale à deux tiers de celle de la tension du bus continu ;
- le dispositif de commande est propre à limiter la valeur absolue de la tension entre la masse électrique et une phase du courant alternatif délivré à la charge, en présence de surtensions dans la charge, à une deuxième valeur limite égale à 120% de la première valeur limite ;
- le redresseur présente une tension homopolaire, et le dispositif de commande est propre à limiter la valeur absolue de la tension homopolaire à une valeur inférieure ou égale à un sixième de celle de la tension du bus continu ;
- le dispositif de commande comporte des moyens de calcul des signaux de commande en fonction d'une modulation de largeur d'impulsion, des moyens de modification de la modulation de largeur d'impulsion suivant une loi de commande interdisant au moins un état de commutation du redresseur par rapport à une modulation prédéterminée de largeur d'impulsion suivant une loi de commande autorisant tous les états de commutation du redresseur, et des moyens pour appliquer les signaux de commande aux interrupteurs du redresseur ;
- le dispositif de limitation est connecté en entrée du redresseur ;
- le dispositif de limitation est connecté en sortie de l'onduleur ;
- le dispositif de limitation comporte un enroulement électromagnétique pour chaque phase du courant alternatif respectif ;
- le dispositif de limitation est connecté entre le redresseur et l'onduleur ;
- le dispositif de limitation comporte un enroulement électromagnétique primaire pour chacune des deux polarités du courant continu propre à circuler entre le redresseur et l'onduleur ; et

- le dispositif de limitation comporte un enroulement secondaire connecté en série avec une résistance, un noyau magnétique de couplage de l'enroulement secondaire avec les enroulements primaires.

L'invention a également pour objet une chaîne d'entraînement propre à être reliée à un réseau électrique alternatif, du type comprenant une machine électrique et un système d'alimentation de la machine électrique en courant électrique alternatif à partir du réseau alternatif, caractérisé en ce que le système d'alimentation est tel que défini ci-dessus.

Suivant un autre mode de réalisation, la chaîne d'entraînement comprend la caractéristique suivante :

- la machine électrique présente une capacité parasite, et le dispositif de liaison à la masse électrique comporte un condensateur présentant une capacité supérieure à la capacité parasite de la machine électrique.

Ces caractéristiques et avantages de l'invention apparaîtront à la lecture de la description qui va suivre, donnée uniquement à titre d'exemple, et faite en référence aux dessins annexés, sur lesquels :

- la figure 1 est un schéma électrique d'une chaine d'entrainement selon l'invention.
- la figure 2 est un schéma équivalent homopolaire de la chaine d'entrainement de la figure 1,
- la figure 3 est un diagramme représentant des tensions et impédances pour les différentes phases du courant alternatif d'un réseau électrique d'alimentation de la chaine d'entrainement de la figure 1,
- la figure 4 est une courbe illustrant la tension homopolaire d'un redresseur de la chaine d'entrainement de la figure 1,
- les figures 5 et 6 sont des courbes représentant respectivement la tension et l'intensité du courant homopolaire circulant au neutre du réseau électrique d'alimentation de la chaine d'entrainement de la figure 1,
- la figure 7 est une courbe représentant la tension entre une masse électrique et une phase du courant alternatif délivrée à une charge par un système d'alimentation de la chaine d'entrainement de la figure 1,
- la figure 8 est un schéma électrique analogue à celui de la figure 1 selon un deuxième mode de réalisation de l'invention, et
- la figure 9 est un schéma électrique analogue à celui de la figure 1 selon un troisième mode de réalisation de l'invention.

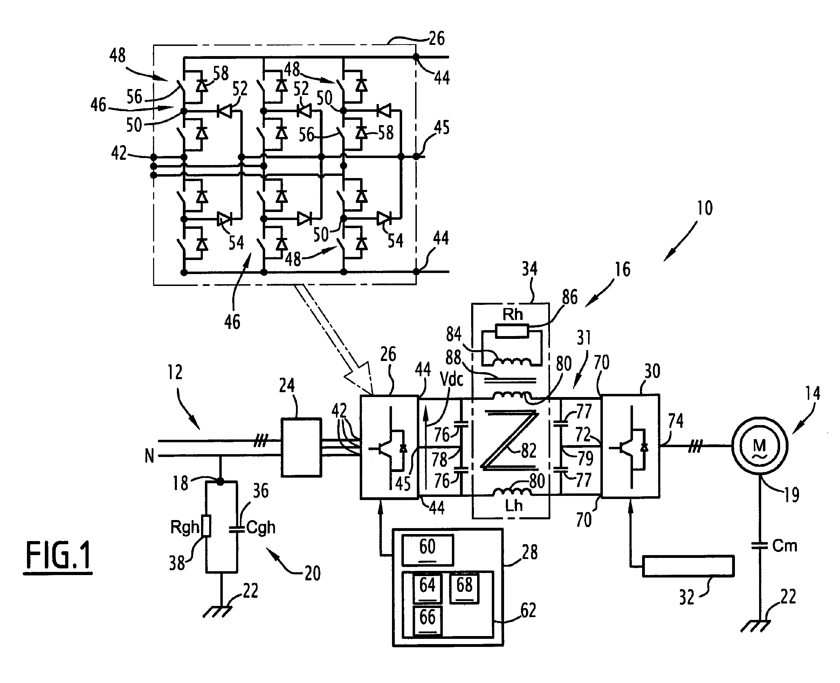

Sur la figure 1, une chaîne d'entraînement 10, reliée à un réseau électrique alternatif 12, comprend une machine électrique 14 et un système 16 d'alimentation de la machine en courant électrique alternatif.

Le réseau électrique 12 est propre à délivrer un courant électrique alternatif comportant au moins une phase, et comporte un point neutre 18. Dans l'exemple de réalisation de la figure 1, le réseau 12 est un réseau triphasé.

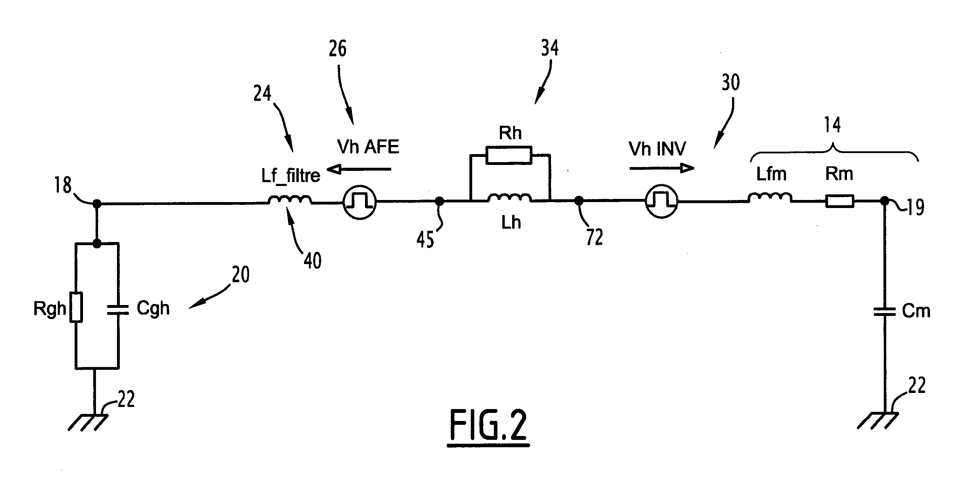

La machine électrique 14 présente une inductance de fuite Lfm, une résistance Rm et une capacité parasite Cm (figure 2).

La machine électrique 14 est, par exemple, un moteur électrique triphasé, et comporte un point neutre 19. Le moteur électrique 14 est, par exemple, un moteur synchrone. En variante, le moteur 14 est un moteur asynchrone.

Le système d'alimentation 16 comprend un dispositif 20 de liaison du réseau électrique alternatif à une masse électrique 22, un filtre 24 connecté au réseau alternatif, un redresseur 26 connecté en sortie du filtre, et un premier dispositif 28 de commande du redresseur. Le système d'alimentation 16 comporte également un onduleur 30 connecté en sortie du redresseur via un bus continu 31 de tension Vdc, un deuxième dispositif 32 de commande de l'onduleur, et un dispositif 34 de limitation du courant de mode commun propre à circuler entre le réseau 12 et la machine 14.

Le système d'alimentation 16 ne comporte pas de liaison de retour entre la sortie de l'onduleur 30 et l'entrée du redresseur 26, ou entre la sortie de l'onduleur 30 et l'entrée du filtre 24.

Le dispositif de liaison 20 comporte un condensateur 36 de capacité Cgh et une résistance 38 d'impédance Rgh, connectée en parallèle du condensateur 36. Lorsque la masse électrique 22 est une terre, le dispositif de liaison 20 est également appelé dispositif de mise à la terre. Dans l'exemple de réalisation de la figure 1, le dispositif de liaison 20 est connecté au point neutre 18 du réseau.

La capacité Cgh du dispositif de liaison est supérieure à la capacité parasite Cm de la machine électrique. La valeur de la capacité Cgh est, par exemple, vingt fois supérieure, de préférence quarante fois supérieure, à celle de la capacité parasite Cm.

Le filtre 24 comporte, pour chaque phase du courant alternatif fourni par le réseau, une bobine électromagnétique 40 d'inductance Lf_filtre, visible sur la figure 2.

Le redresseur 26 est relié au réseau 12 sans présence d'un transformateur entre lui et le réseau alternatif 12. Le redresseur 26 est propre à convertir le courant alternatif fourni par le réseau 12 en un courant continu délivré en sortie du redresseur.

Le redresseur 26 est un redresseur commandé, également appelé AFE (de l'anglais Active Front End). Il comporte une borne d'entrée 42 pour chaque phase du courant alternatif fourni par le réseau 12, deux bornes de sortie 44 et un point milieu de sortie 45. Le redresseur 26 est, par exemple, un redresseur triphasé, et comporte trois bornes d'entrée 42.

Dans l'exemple de réalisation de la figure 1, le redresseur 26 présente une topologie du type clampée par le neutre, également appelée topologie NPC (de l'anglais Neutral Point Clamped), et comprend deux branches de commutation 46 pour chaque phase dudit courant alternatif. Chaque branche de commutation est connectée entre une borne d'entrée 42 respective et la borne de sortie 44 correspondante. Chaque branche de commutation 46 comporte, par exemple, deux interrupteurs électroniques commandables 48 connectés en série et reliés entre eux par un point intermédiaire 50. Pour chaque phase du courant alternatif, le point intermédiaire 50 d'une branche de commutation 46 est relié au point milieu 45 par l'intermédiaire d'une première diode 52 connectée en inverse, le point intermédiaire 50 de l'autre branche de commutation 46 étant relié au point milieu 45 par l'intermédiaire d'une deuxième diode 54 connectée en sens direct.

En variante, le module de commutation 26 présente une topologie du type pilotée par le neutre, également appelée topologie NPP (de l'anglais Neutral Point Piloted). Le module de commutation 26 comporte alors deux branches extrêmes et une branche intermédiaire, également appelée branche transversale. Chaque branche extrême est connectée entre une borne d'entrée respective et la borne de sortie correspondante, et comporte un interrupteur électronique commandable. La branche intermédiaire est connectée entre une borne d'entrée respective et le point milieu, et comporte deux interrupteurs connectés en anti-série.

Chaque interrupteur électronique commandable 48 est, par exemple, bidirectionnel en courant et en tension, et comporte un transistor 56 et une diode 58 connectée en antiparallèle du transistor. Le transistor 56 est, par exemple, un transistor IGBT de l'anglais Insulated Gate Bipolar Transistor.

Le redresseur 26 présente une tension homopolaire VhAFE, visible sur la figure 2, entre ses bornes d'entrée et de sortie.

Le premier dispositif de commande 28 comporte une unité de traitement d'informations formée, par exemple, d'un processeur de données 60 associé à une mémoire 62. La mémoire 62 est apte à stocker un logiciel 64 de calcul de signaux de commande des interrupteurs 48 en fonction d'une modulation de largeur d'impulsion, un logiciel 66 de modification de la modulation de largeur d'impulsion, et un logiciel 66 d'application des signaux de commande aux interrupteurs 48 du redresseur. Le logiciel de modification 66 est propre à modifier la modulation de largeur d'impulsion suivant une loi de commande interdisant au moins un état de commutation du redresseur 26 par rapport à une modulation prédéterminée de largeur d'impulsion suivant une loi de commande autorisant tous les états de commutation du redresseur 26.

Le premier dispositif de commande 28 est propre à limiter la valeur absolue de la tension entre la masse électrique 22 et une phase du courant alternatif délivré à la machine 14, en l'absence de surtensions dans la machine 14, à une première valeur limite strictement inférieure à celle de la tension Vdc du bus continu 31. La première valeur limite est de préférence égale à deux tiers de celle de la tension Vdc du bus continu 31.

En présence de surtensions dans la machine 14, le premier dispositif de commande 28 est propre à limiter la valeur absolue de la tension entre la masse électrique 22 et une phase du courant alternatif délivré à la machine 14 à une deuxième valeur limite égale à 120% de la première valeur limite.

Le premier dispositif de commande 28 est propre à limiter la valeur absolue de la tension homopolaire VhAFE à une valeur inférieure ou égale à un sixième de celle de la tension Vdc du bus continu 31.

L'onduleur 30 comporte deux bornes d'entrée 70, un point milieu d'entrée 72, ainsi qu'une borne de sortie 74 pour chaque phase du courant alternatif délivré à la machine 14. L'onduleur 30 comporte des interrupteurs électroniques commandables propres à convertir le courant continu fourni par le redresseur 26 en un courant alternatif délivré à la machine 14 reliée à sa sortie.

L'onduleur 30 est, par exemple, un onduleur trois niveaux. L'onduleur 30 est, par exemple, un onduleur clampé par le neutre, également appelé onduleur NPC (de l'anglais Neutral Point Clamped). En variante, l'onduleur 30 est un onduleur piloté par le neutre, également appelé onduleur NPP (de l'anglais Neutral Point Piloted).

Le bus continu 31 comporte deux premiers condensateurs 76 et deux deuxièmes condensateurs 77. Les deux premiers condensateurs 76 sont connectés en série entre les deux bornes de sortie 44 du redresseur et reliés entre eux par un point milieu connecté au point milieu de sortie 45 du redresseur. Les deuxièmes condensateurs 77 sont connectés en série entre les bornes d'entrée 70 de l'onduleur et reliés entre eux par un point milieu 79 connecté au point milieu d'entrée 72 de l'onduleur.

Le bus continu 31 présente la tension continue Vdc entre les deux bornes de sortie 44 du redresseur, et également entre les deux bornes d'entrée 70 de l'onduleur.

Le deuxième dispositif de commande 32 comporte, de manière connue en soi, des moyens de calcul des signaux de commande des interrupteurs de l'onduleur 30 en fonction d'une modulation de largeur d'impulsion et des moyens pour appliquer les signaux de commande aux interrupteurs de l'onduleur 30.

Dans l'exemple de réalisation de la figure 1, le dispositif de limitation 34 est connecté entre le redresseur 26

et l'onduleur 30. Plus précisément, le dispositif de limitation 34 est connecté entre les premiers condensateurs 76 et les deuxièmes condensateurs 78, en parallèle des bornes de sortie 44 du redresseur, d'une part, et des bornes d'entrée 70 de l'onduleur, d'autre part.

Le dispositif de limitation 34 comporte un enroulement électromagnétique primaire 80 pour chacune des deux polarités du courant continu propre à circuler entre le redresseur 26 et l'onduleur 30, et un noyau 82 de couplage magnétique des deux enroulements primaires. Le dispositif de limitation 34 comporte également un enroulement secondaire 84 connecté en série avec une résistance 86 d'impédance Rh, appelée résistance d'amortissement, et un deuxième noyau magnétique 88 de couplage de l'enroulement secondaire avec les enroulements primaires. Les enroulements primaires 80 présentent une inductance Lh, visible sur la figure 2.

En variante, le dispositif de limitation 34 comporte un seul noyau magnétique de couplage des deux enroulements primaires et de l'enroulement secondaire.

En variante, la résistance d'amortissement est connectée directement en parallèle de l'enroulement électromagnétique primaire 80. En variante encore, la résistance d'amortissement est formée par la résistance équivalente aux pertes fer du noyau.

Sur la figure 2, le schéma équivalent homopolaire de la chaîne d'entraînement 10 comporte successivement depuis le point neutre 18 du réseau jusqu'au point neutre 19 de la machine, l'impédance de fuite Lf_filtre du filtre 24, la tension homopolaire VhAFE du redresseur 26, l'inductance homopolaire Lh et la résistance d'amortissement Rh connectée en parallèle de l'inductance homopolaire du dispositif de limitation 34, la tension homopolaire VHINV de l'onduleur 30, et l'inductance de fuite Lfm et la résistance Rm de la machine électrique 14. Le dispositif de mise à la masse électrique 20 connecté entre le neutre 18 du réseau et la masse électrique 22 présente la capacité Cgh en parallèle de la résistance Rgh. La capacité parasite Cm de la machine est agencée entre le point neutre 19 de la machine et la masse électrique 22.

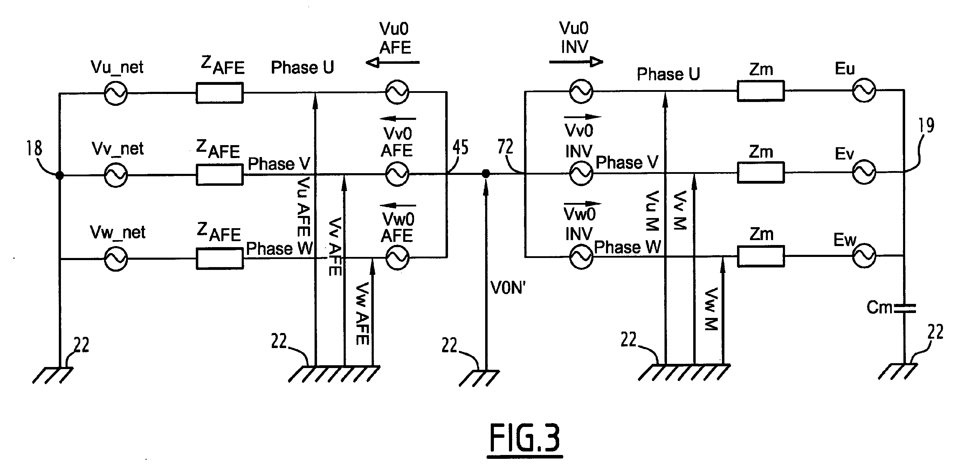

La figure 3 représente, pour chaque phase U, V, W du courant alternatif fourni par le réseau 12, les tensions respectivement du réseau 12, du redresseur 26, de l'onduleur 30 et de la machine 14. Compte tenu des fréquences de commutation du redresseur 26 et de l'onduleur 30, la capacité Cgh du dispositif de mise à la masse est assimilée à un fil. L'inductance homopolaire Lh n'est pas représentée sur la figure 3, les surtensions sur la machine 14 n'étant pas prises en compte en première approximation. Il est alors considéré que le point milieu de sortie 45 du redresseur est relié par un fil au point milieu d'entrée 72 de l'onduleur.

Les tensions du réseau 12 sont respectivement notées Vu_net, Vv_net, Vw_net. Les tensions entre chacune des phases U, V, W et le point milieu 45 de sortie du redresseur sont respectivement notées Vu0AFE, Vv0AFE et Vw0AFE, la tension entre chacune des phases U, V, W du redresseur et la masse électrique 22 étant respectivement notée VuAFE, VvAFE, VwAFE.

La tension entre le point milieu du bus continu 31 et la masse électrique 22 est notée VON', et correspond à la tension entre le point milieu de sortie 45 du redresseur et la masse électrique 22, ou encore à la tension entre le point milieu d'entrée 72 de l'onduleur et la masse électrique 22.

La tension entre le point milieu d'entrée 72 et chacune des phases U, V, W de l'onduleur 30 est respectivement notée Vu0INV, Vv0INV, Vw0INV.

La tension entre chacune des phases U, V, W de la machine 14 et la masse électrique 22 est respectivement notée VuM, VvM et VwM.

D'après le schéma de la figure 3, on obtient, d'une part, le premier système d'équations suivant :

$$\begin{cases} V_{0N'} = Vu_{AFE} - Vu0_{AFE} \\ V_{0N'} = Vv_{AFE} - Vv0_{AFE} \\ V_{0N'} = Vw_{AFE} - Vw0_{AFE} \end{cases} \qquad (1)$$

On déduit de ce premier système d'équations la relation suivante :

$$V_{0N'} = \frac{1}{3}\left(Vu_{AFE} + Vv_{AFE} + Vw_{AFE} - (Vu0_{AFE} + Vv0_{AFE} + Vw0_{AFE})\right) \qquad (2)$$

pour aboutir à l'égalité suivante :

$$V_{0N'} = \frac{1}{3}\left(0 - (Vu0_{AFE} + Vv0_{AFE} + Vw0_{AFE})\right) = -Vh_{AFE} \tag{3}$$

D'après le schéma de la figure 3, on obtient, d'autre part, le deuxième système d'équations suivant :

$$\begin{cases} Vu_M = Vu0_{INV} + V_{0N'} \\ Vv_M = Vv0_{INV} + V_{0N'} \\ Vw_{Mr} = Vw0_{INV} + V_{0N'} \end{cases} \tag{4}$$

On déduit alors de l'égalité (3) et du deuxième système d'équations (4) que la tension VuM, VvM, VwM entre la masse électrique 22 et une phase respective U, V, W du courant alternatif délivré à la machine 14 est égale à la tension Vu0INV, Vv0INV, Vw0INV entre la phase respective et le point milieu d'entrée 72 de l'onduleur moins la tension homopolaire VhAFE générée par le redresseur commandé 26 :

$$\begin{cases} Vu_M = Vu0_{INV} - Vh_{AFE} \\ Vv_M = Vv0_{INV} - Vh_{AFE} \\ Vw_M = Vw0_{INV} - Vh_{AFE} \end{cases} \tag{5}$$

Or, la valeur maximale de la tension Vu0INV, Vv0INV, Vw0INV entre une phase respective U, V, W et le point milieu d'entrée 72 de l'onduleur est égale à la moitié de la tension Vdc du bus continu 31, de par le fonctionnement intrinsèque de tout onduleur, cette valeur n'étant pas modifiable.

Dès lors, il est nécessaire d'agir sur la tension homopolaire VhAFE générée par le redresseur 26, afin de limiter la valeur absolue de la tension VuM, VvM, VwM entre la masse électrique 22 et une phase respective U, V, W du courant alternatif délivré à la machine 14.

La limitation en valeur absolue de la tension homopolaire VhAFE est obtenue en modifiant la modulation de largeur d'impulsion (MLI) du premier dispositif de commande 28, afin d'interdire au moins un état de commutation du redresseur 26 par rapport à une modulation prédéterminée de largeur d'impulsion suivant une loi de commande autorisant tous les états de commutation du redresseur 26.

La modulation prédéterminée de largeur d'impulsion est, par exemple, une modulation de largeur d'impulsion discontinue généralisée, également appelée GDPWM (de l'anglais Generalized Discontinuous PWM).

En particulier, si la valeur limite choisie pour la tension VuM, VvM, VwM est égale à deux tiers de celle de la tension Vdc du bus continu 31 en l'absence de surtensions dans la machine 14, alors la valeur absolue de la tension homopolaire VhAFE doit être inférieure ou égale à un sixième de la valeur de la tension Vdc du bus continu 31, d'après les équations précédentes.

Or, la tension homopolaire VhAFE s'écrit sous la forme :

$$Vh_{AFE} = \frac{Vu0_{AFE} + Vv0_{AFE} + Vw0_{AFE}}{3} = \frac{Fmu + Fmv + Fmw}{3} \times \frac{Vdc}{2}$$
$$= (Fmu + Fmv + Fmw) \times \frac{Vdc}{6} \tag{6}$$

où Fmu, Fmv, Fmw représentent des fonctions de modulation de chaque phase respective U, V, W.

Dès lors, dans le cas particulier où la valeur absolue de la tension homopolaire VhAFE est inférieure ou égale à un sixième de la valeur de la tension continue Vdc, la loi de commande correspondant à la modulation de largeur d'impulsion modifiée doit alors éviter toutes les combinaisons (Fmu, Fmv, Fmw) vérifiant la condition suivante :

$$\left| Fmu + Fmv + Fmw \right| > 1 \tag{7}$$

Les états de commutation interdits pour le redresseur 26 correspondent alors aux lignes encadrées dans le tableau ci-après :

| Etat | $Fm_U$, $Fm_V$, $Fm_W$ | Vu0 | Vv0 | Vw0 |
|---|---|---|---|---|
| 0 | (-1, -1. -1) | -E/2 | -E/2 | -E/2 |
| 1 | (1, -1, -1) | E/2 | -E/2 | -E/2 |
| 2 | (1, 1, -1) | E/2 | E/2 | -E/2 |
| 3 | (-1, 1, -1) | -E/2 | E/2 | -E/2 |
| 4 | (-1, 1, 1) | -E/2 | E/2 | E/2 |
| 5 | (-1, -1, 1) | -E/2 | -E/2 | E/2 |
| 6 | (1, -1, 1) | E/2 | -E/2 | E/2 |
| 7 | (1, 1, 1) | E/2 | E/2 | E/2 |
| 8 | (0, 0, 0) | 0 | 0 | 0 |
| 9 | (1, 0, -1) | E/2 | 0 | -E/2 |
| 10 | (0, 1. -1) | 0 | E/2 | -E/2 |
| 11 | (-1, 1, 0) | -E/2 | E/2 | 0 |
| 12 | (-1, 0, 1) | -E/2 | 0 | E/2 |
| 13 | (0, -1. 1) | 0 | -E/2 | E/2 |
| 14 | (1, -1. 0) | E/2 | -E/2 | 0 |
| 15 | (1, 0, 0) | E/2 | 0 | 0 |
| 16 | (1, 1, 0) | E/2 | E/2 | 0 |
| 17 | (0, 1, 0) | 0 | E/2 | 0 |
| 18 | (0, 1, 1) | 0 | E/2 | E/2 |
| 19 | (0, 0, 1) | 0 | 0 | E/2 |
| 20 | (1, 0, 1) | E/2 | 0 | E/2 |
| 21 | (0, -1, -1) | 0 | -E/2 | -E/2 |
| 22 | (0, 0, -1) | 0 | 0 | -E/2 |
| 23 | (-1, 0, -1) | -E/2 | 0 | -E/2 |
| 24 | (-1, 0, 0) | -E/2 | 0 | 0 |
| 25 | (-1, -1, 0) | -E/2 | -E/2 | 0 |
| 26 | (0, -1, 0) | 0 | -E/2 | 0 |

En d'autres termes, le logiciel de modification 66 modifie la modulation de largeur d'impulsion afin d'interdire les états de commutation 0, 7, 16, 18, 20, 21, 23 et 25 par rapport à une modulation prédéterminée de largeur d'impulsion autorisant tous les états de commutation 0 à 26 dans l'exemple de réalisation du redresseur 26 à trois niveaux.

La modification de la modulation de largeur d'impulsion est obtenue en modifiant la courbe de référence, la porteuse restant identique. La courbe de référence est modifiée de sorte que le redresseur 26 reste, en cas d'état de commutation interdit, dans l'état de commutation précédant temporellement l'état de commutation interdit selon la modulation prédéterminée de largeur d'impulsion, pendant la durée de l'état de commutation interdit telle que définie par la modulation prédéterminée de largeur d'impulsion.

En variante, la courbe de référence est modifiée de sorte que le redresseur 26 passe, en cas d'état de commutation interdit, dans l'état de commutation suivant temporellement l'état de commutation interdit selon la modulation prédéterminée de largeur d'impulsion, pendant la durée de l'état de commutation interdit telle que définie par la modulation prédéterminée de largeur d'impulsion.

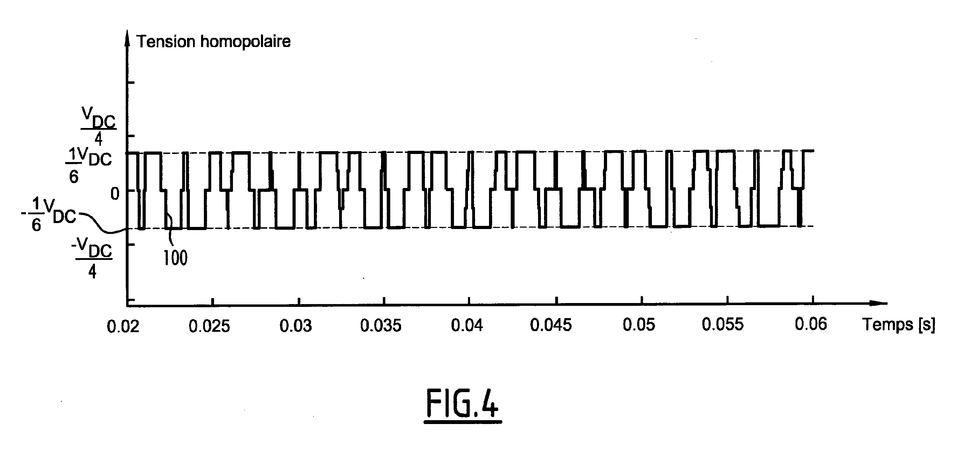

Sur la figure 4, la courbe 100 représente la tension homopolaire VhAFE obtenue après modification de la modulation de largeur d'impulsion. La tension homopolaire VhAFE est bien inférieure ou égale, en valeur absolue, à un sixième de la valeur de la tension continue Vdc du bus 31.

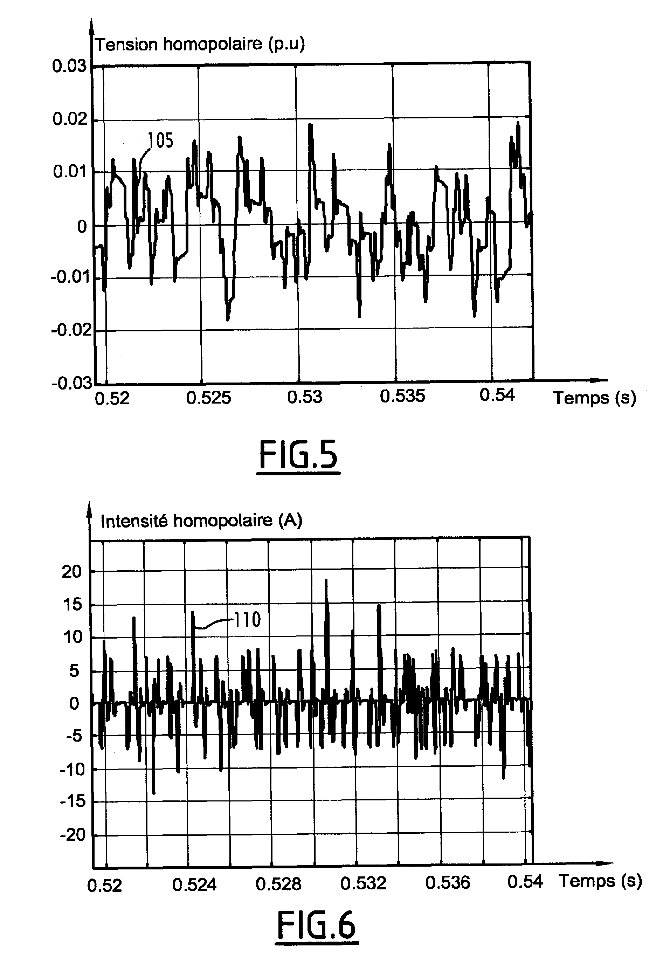

Les figures 5 à 7 illustrent les résultats obtenus en simulant une chaine d'entrainement 10 selon l'exemple de réalisation de la figure 1, avec un réseau électrique 12 présentant une tension nominale d'amplitude égale à 6,6 kV et une fréquence nominale de 60 Hz.

Sur la figure 5, la courbe 105 représente la tension homopolaire aux bornes du dispositif de mise à la masse 20 par unité (p. u.) de la tension nominale du réseau 12. La courbe 105 représente donc la tension homopolaire entre la masse électrique 22 et le neutre 18 du réseau, et ladite tension homopolaire est inférieure à 5% de la tension nominale du réseau 12 en valeur crête.

Sur la figure 6, le courant homopolaire circulant entre le dispositif de mise à la masse 20 et le neutre 18 du réseau électrique présente une intensité de faible valeur, représentée par la courbe 110. La valeur efficace, ou valeur RMS (de l'anglais Root Mean Square), de l'intensité du courant homopolaire est inférieure à 5 A, ce qui permet d'éviter tout risque d'endommagement des parties magnétiques de la machine 14.

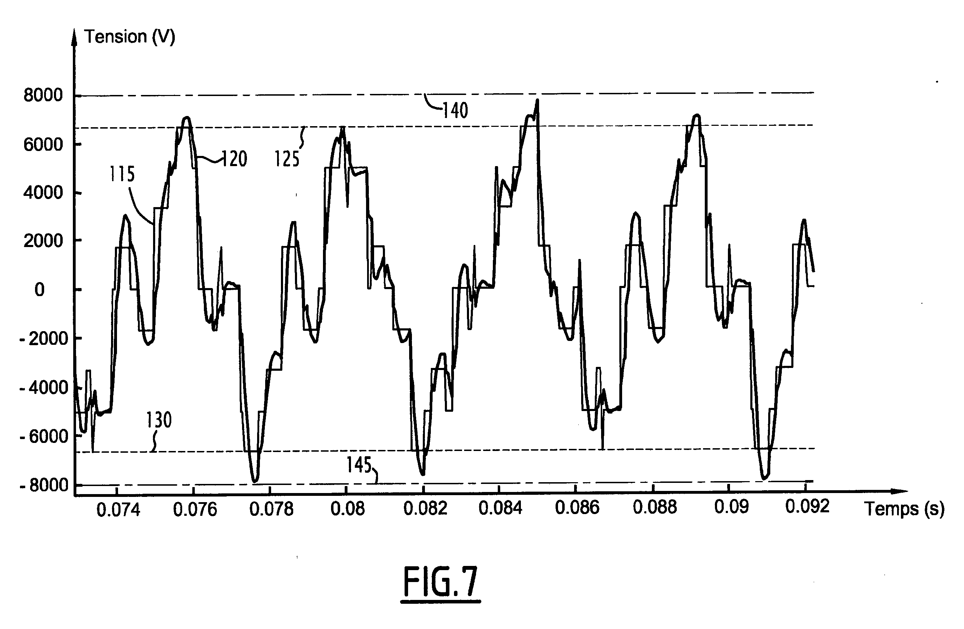

Sur la figure 7, la courbe 115 représente la tension VuM, VvM, VwM entre la masse électrique 22 et une phase respective U, V, W du courant alternatif délivré à la machine 14 sans prendre en compte les surtensions dans ladite machine, la courbe 120 représentant la même tension VuM, VvM, VwM en prenant en compte lesdites surtensions.

Sans prendre en compte les surtensions dans la machine 14, la tension VuM, VvM, VwM est inférieure, en valeur absolue, à deux tiers de la valeur de la tension Vdc du bus continu 31, les seuils 125, 130 en traits pointillés représentant respectivement deux tiers de la valeur de la tension Vdc et moins deux tiers de la valeur de la tension Vdc. Dans l'exemple de réalisation de la figure 7, la première valeur limite est égale à deux tiers de la valeur de la tension Vdc du bus continu 31.

En prenant en compte les surtensions dans la machine 14, la tension VuM, VvM, VwM est inférieure, en valeur absolue, à 120% de la première valeur limite égale à deux tiers de la valeur de la tension Vdc, les seuils 140, 145 en traits mixtes représentant respectivement 120% de deux tiers de la valeur de la tension Vdc et 120% de moins deux tiers de la valeur de la tension Vdc. La deuxième valeur limite est égale à 120% de la première valeur limite. Les surtensions dans la machine 14 sont amorties et limitées à 20% de la valeur de tension VuM, VvM, VwM sans surtension, grâce notamment à la présence de la résistance d'amortissement 86 du dispositif de limitation.

Ainsi, le système d'alimentation 16 selon l'invention permet de limiter la tension homopolaire, tout en ne nécessitant pas la présence d'un transformateur entre le réseau 12 et le redresseur 26, ce qui n'engendre pas de surcoûts. Ceci permet également de réduire l'encombrement mécanique du système d'alimentation 16 par rapport à un système d'alimentation avec des filtres de mode commun reliés par une liaison électrique de passage du courant de mode commun, ou encore par rapport à un système d'alimentation avec un transformateur entre le réseau et le redresseur.

En outre, le système d'alimentation 16 selon l'invention ne comporte pas de liaison de retour entre la sortie de l'onduleur 30 et l'entrée du redresseur 26, ou entre la sortie de l'onduleur 30 et l'entrée du filtre 24. Ceci permet aussi de réduire l'encombrement mécanique du système d'alimentation 16, ainsi que son coût.

En outre, la valeur de la tension homopolaire entre la masse électrique 22 et le neutre 18 du réseau est inférieure à 5% de la tension nominale du réseau 12 en valeur crête, de par le condensateur 36 présentant une capacité Cgh supérieure à la capacité parasite Cm de la machine électrique. Le système d'alimentation 16 ne perturbera donc pas, en termes de tension d'isolement, un autre équipement connecté directement sur le réseau électrique 12.

Les surtensions dans la machine 14 sont amorties et limitées de par la présence de la résistance 86 du dispositif de limitation, également appelée résistance d'amortissement.

Par ailleurs, le redresseur commandé 26 permet de réduire le taux d'harmoniques sur le réseau 12 et de réguler la tension Vdc du bus continu, ainsi que le facteur de puissance de la chaine d'entrainement 10. Le redresseur commandé 26 permet également de régénérer sur le réseau 12 de l'énergie électrique issu de la machine électrique 14, en cas de freinage de cette dernière.

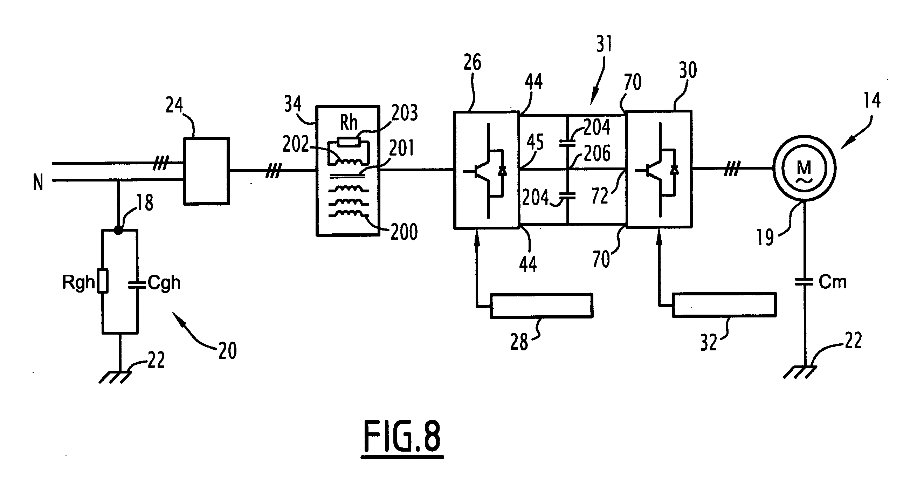

La figure 8 illustre un deuxième mode de réalisation de l'invention pour lesquels les éléments analogues au premier mode de réalisation, décrit précédemment, sont repérés par des références identiques, et ne sont donc pas décrits à nouveau.

Selon le deuxième mode de réalisation, le dispositif de limitation 34 est connecté en entrée du redresseur 26. Le dispositif de limitation 34 comporte un enroulement électromagnétique 200, pour chaque phase du courant alternatif du réseau 12, ainsi qu'un noyau 201 de couplage des enroulements magnétiques lorsque le réseau 12 est un réseau polyphasé.

Le dispositif de limitation 34 comporte également un enroulement secondaire 202 connecté en série avec une résistance 203 d'impédance Rh, appelée résistance d'amortissement, l'enroulement secondaire 202 étant couplé magnétiquement aux enroulements primaires 200 via le noyau de couplage 201.

En variante, la résistance d'amortissement est connectée directement en parallèle de l'enroulement électromagnétique primaire 80. En variante encore, la résistance d'amortissement est formée par la résistance équivalente aux pertes fer du noyau.

Les bornes de sortie 44, et respectivement le point milieu de sortie 45, du redresseur sont alors directement connectées aux bornes d'entrée 70, et respectivement au point milieu d'entrée 72, de l'onduleur. Le bus continu 31 comporte deux condensateurs 204 connectés en série entre les bornes de sortie 44, ou encore entre les bornes d'entrée 70, les deux condensateurs 204 étant reliés entre eux par un point milieu 206 connecté aux points milieux 45, 72.

Le fonctionnement de ce deuxième mode de réalisation est identique à celui du premier mode de réalisation et n'est donc pas décrit à nouveau.

Les avantages de ce deuxième mode de réalisation sont identiques à ceux du premier mode de réalisation et ne sont donc pas décrits à nouveau.

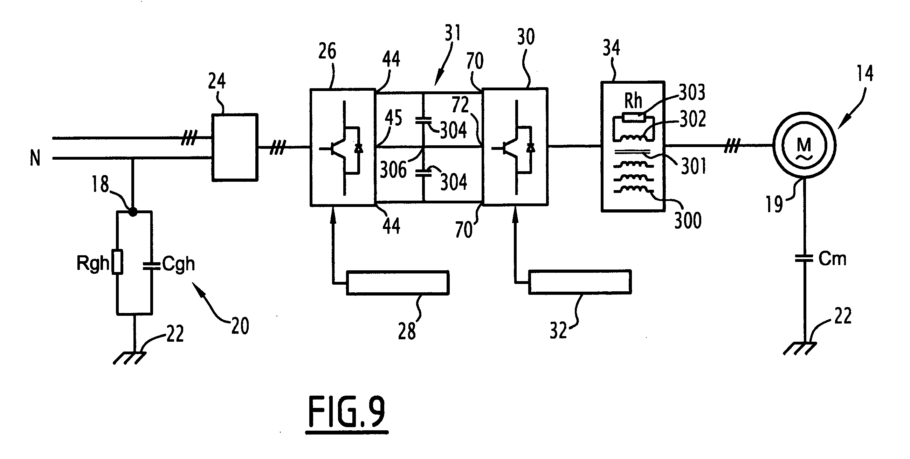

La figure 9 illustre un troisième mode de réalisation de l'invention pour lesquels les éléments analogues au premier mode de réalisation, décrit précédemment, sont repérés par des références identiques, et ne sont donc pas décrits à nouveau.

Selon le troisième mode de réalisation, le dispositif de limitation 34 est connecté en sortie de l'onduleur 30. Le dispositif de limitation 34 comporte un enroulement électromagnétique 300, pour chaque phase du courant alternatif délivré à la machine 14, ainsi qu'un noyau 301 de couplage des enroulements magnétiques lorsque la machine électrique 14 est une machine polyphasée.

Le dispositif de limitation 34 comporte également un enroulement secondaire 302 connecté en série avec une résistance 303 d'impédance Rh, l'enroulement secondaire 302 étant couplé magnétiquement aux enroulements primaires 300 via le noyau de couplage 301.

En variante, la résistance d'amortissement est connectée directement en parallèle de l'enroulement électromagnétique primaire 80. En variante encore, la résistance d'amortissement est formée par la résistance équivalente aux pertes fer du noyau.

Les bornes de sortie 44, et respectivement le point milieu de sortie 45, du redresseur sont alors directement connectées aux bornes d'entrée 70, et respectivement au point milieu d'entrée 72, de l'onduleur. Le bus continu 31 comporte deux condensateurs 304 connectés en série entre les bornes de sortie 44, ou encore entre les bornes d'entrée 70, les deux condensateurs 304 étant reliés entre eux par un point milieu 306 connecté aux points milieux 45, 72.

Le fonctionnement de ce troisième mode de réalisation est identique à celui du premier mode de réalisation et n'est donc pas décrit à nouveau.

Les avantages de ce troisième mode de réalisation sont identiques à ceux du premier mode de réalisation et ne sont donc pas décrits à nouveau.

## Revendications

1. Système (16) d'alimentation d'une charge (14) en courant électrique alternatif à partir d'un réseau électrique alternatif (12), du type comprenant :

   - un dispositif (20) de liaison du réseau électrique alternatif (12) à une masse électrique (22),
   - un redresseur (26) connecté au réseau électrique alternatif (12), sans présence d'un transformateur entre le réseau alternatif (12) et le redresseur (26), le redresseur (26) comportant des interrupteurs électroniques commandables (48) propres à convertir le courant alternatif fourni par le réseau électrique (12) en un courant continu délivré en sortie du redresseur (26),
   - un dispositif (28) de commande des interrupteurs électroniques (48) du redresseur (26) propre à envoyer des signaux de commande aux interrupteurs (48) respectifs,
   - un onduleur (30) connecté en sortie du redresseur (26) via un bus continu (31) et propre à convertir le courant continu fourni par le redresseur (26) en un courant alternatif délivré à la charge (14) reliée à sa sortie, et
   - un dispositif (34) de limitation du courant de mode commun propre à circuler entre le réseau (12) et la charge (14),

   **caractérisé en ce que** le dispositif de commande (28) est propre à limiter la valeur absolue de la tension (VuM, VvM, VwM) entre la masse électrique (22) et une phase (U, V, W) du courant alternatif délivré à la charge (14), en l'absence de surtensions dans la charge (14), à une première valeur limite strictement inférieure à celle de la tension (Vdc) du bus continu (31).

2. Système (16) selon la revendication 1, dans lequel la première valeur limite est égale à deux tiers de celle de la tension (Vdc) du bus continu (31).

3. Système (16) selon la revendication 1 ou 2, dans lequel le dispositif de commande (28) est propre à limiter la valeur absolue de la tension (VuM, VvM, VwM) entre la masse électrique (22) et une phase (U, V, W) du courant alternatif délivré à la charge (14), en présence de surtensions dans la charge (14), à une deuxième valeur limite égale à 120% de la première valeur limite.

4. Système (16) selon l'une quelconque des revendications précédentes, dans lequel le redresseur (26) présente une tension homopolaire (VhAFE), et dans lequel le dispositif de commande (28) est propre à limiter la valeur absolue de la tension homopolaire (VhAFE) à une valeur inférieure ou égale à un sixième de celle de la tension (Vdc) du bus continu (31).

5. Système (16) selon l'une quelconque des revendications précédentes, dans lequel le dispositif de commande (28) comporte des moyens (64) de calcul des signaux de commande en fonction d'une modulation de largeur d'impulsion, des moyens (66) de modification de la modulation de largeur d'impulsion suivant une loi de commande interdisant au moins un état de commutation du redresseur (26) par rapport à une modulation prédéterminée de largeur d'impulsion suivant une loi de commande autorisant tous les états de commutation du redresseur (26), et des moyens (68) pour appliquer les signaux de commande aux interrupteurs (48) du redresseur (26).

6. Système (16) selon l'une quelconque des revendications précédentes, dans lequel le dispositif de limitation (34) est connecté en entrée du redresseur (26).

7. Système (16) selon l'une quelconque des revendications 1 à 5, dans lequel le dispositif de limitation (34) est connecté en sortie de l'onduleur (30).

8. Système (16) selon la revendication 6 ou 7, dans lequel le dispositif de limitation (34) comporte un enroulement électromagnétique (200 ; 300) pour chaque phase du courant alternatif respectif.

9. Système (16) selon l'une quelconque des revendications 1 à 5, dans lequel le dispositif de limitation (34) est connecté entre le redresseur (26) et l'onduleur (30).

10. Système (16) selon la revendication 9, dans lequel le dispositif de limitation (34) comporte un enroulement électromagnétique primaire (80) pour chacune des deux polarités du courant continu propre à circuler entre le redresseur (26) et l'onduleur (30).

11. Système (16) selon la revendication 8 ou 10, dans lequel le dispositif de limitation (34) comporte un enroulement secondaire (84 ; 202 ; 302) connecté en série avec une résistance (86 ; 203 ; 303), un noyau magnétique (88 ; 201 ; 301) de couplage de l'enroulement secondaire (84 ; 202 ; 302) avec les enroulements primaires (80 ; 200 ; 300).

12. Chaîne d'entraînement (10) propre à être reliée à un réseau électrique alternatif (12), du type comprenant une machine électrique (14) et un système 16) d'alimentation de la machine électrique (14) en courant électrique alternatif à partir du réseau alternatif (12), **caractérisé en ce que** le système d'alimentation (16) est conforme à l'une quelconque des revendications précédentes.

13. Chaîne (10) selon la revendication 12, dans laquelle la machine électrique (14) présente une capacité parasite (Cm), et le dispositif de liaison à la masse électrique (22) comporte un condensateur (36) présentant une capacité (Cgh) supérieure à la capacité parasite (Cm) de la machine électrique (14).

**Patentansprüche**

1. Versorgungssystem (16) einer Last (14) mit Wechselstrom aus einem elektrischen Wechselspannungsnetz (12), in der Art aufweisend:

   - eine Einrichtung (20) zur Verbindung des Wechselspannungsnetzes (12) mit einer elektrischen Masse (22),
   - einen Gleichrichter (26), der mit dem elektrischen Wechselspannungsnetz (12) verbunden ist, ohne das Vorhandensein eines Transformators zwischen dem Wechselspannungsnetz (12) und dem Gleichrichter (26), wobei der Gleichrichter (26) steuerbare elektronische Schalter (48) aufweist, um den von dem elektrischen Wechselspannungsnetz (12) bereitgestellten Wechselstrom in einen am Ausgang des Gleichrichters (26) bereitgestellten Gleichstrom zu wandeln,
   - eine Einrichtung (28) zur Steuerung der elektronischen Schalter (48) des Gleichrichters (26), um Steuersignale an die jeweiligen Schalter (48) zu senden.
   - Einen Wechselrichter (30), der mit dem Ausgang des Gleichrichters (26) über einen Gleichspannungsbus (31) verbunden und dazu eingerichtet ist, den durch den Gleichrichter (26) bereitgestellten Gleichstrom in einen Wechselstrom zu wandeln, der an die Last (14) abgegeben ist, die mit seinem Ausgang verbunden ist, und
- eine Einrichtung (34) zur Begrenzung eines Gleichtaktstroms, der zwischen dem Netz (12) und der Last (14) fließen kann,
- **dadurch gekennzeichnet, dass** die Einrichtung zur Steuerung (28) dazu eingerichtet ist, den Absolutwert der Spannung (VuM, VvM, VwM) zwischen der elektrischen Masse (22) und einer Phase (U, V, W) des an die Last (14) abgegebenen Wechselstroms bei Nichtvorhandensein von Überspannungen in der Last (14) auf einen ersten Grenzwert zu begrenzen, der strikt kleiner ist als der der Spannung (Vdc) des Gleichspannungsbusses (31).

2. System (16) nach Anspruch 1, bei dem der erste Grenzwert gleich 2/3 des Wertes der Spannung (Vdc) des Gleichspannungsbusses (31) ist.

3. System (16) nach Anspruch 1 oder 2, bei dem die Einrichtung zur Steuerung (28) dazu eingerichtet ist, den Absolutwert der Spannung (VuM, VvM, VbM) zwischen der elektrischen Masse (22) und einer Phase (U, V, W) des an die Last (14) abgegebenen Wechselstroms bei Vorhandensein von Überspannungen in der Last (14) auf einen zweiten Grenzwert zu begrenzen, der gleich 120 % des ersten Grenzwertes ist.

4. System (16) nach einem der vorhergehenden Ansprüche, bei dem der Gleichrichter (26) eine Nullspannung (VhAFE) bereitstellt, und bei dem die Einrichtung zur Steuerung (28) dazu eingerichtet ist, den Absolutwert der Nullspannung (VhAFE) auf einen Wert zu begrenzen, der kleiner oder gleich 1/6 des Wertes (Vdc) des Gleichspannungsbusses (31) ist.

5. System (16) nach einem der vorhergehenden Ansprüche, bei dem die Einrichtung zur Steuerung (28) Mittel (64) aufweist: Mittel zur Bestimmung von Steuersignalen als Funktion einer Modulation der Impulsgröße, Mittel (66) zur Modifikation der Modulation der Impulsgröße gemäß eines Steuergesetzes, das zumindest einen Zustand der Kommutation des Gleichrichters (26) bezüglich einer vorherbestimmten Modulation der Impulsgrößen gemäß eines Steuergesetzes untersagt, das alle Zustände der Kommutation des Gleichrichters (26) zulässt, sowie Mittel (68) um die Steuersignale auf die Schalter (48) des Gleichrichters (26) anzuwenden.

6. System (16) nach einem der vorhergehenden Ansprüche, bei dem die Einrichtung zur Begrenzung (34) mit dem Eingang des Gleichrichters (26) verbunden ist.

7. System (16) nach einem der Ansprüche 1-5, bei dem die Einrichtung zur Begrenzung (34) mit dem Ausgang des Wechselrichters (30) verbunden ist.

8. System (16) nach Anspruch 6 oder 7, bei dem die Einrichtung zur Begrenzung (34) eine elektromagnetische Spule (200; 300) für jede betreffende Wechselstromphase aufweist.

9. System (16) nach einem der Ansprüche 1-5, bei dem die Einrichtung zur Begrenzung (34) zwischen den Gleichrichter (26) und den Wechselrichter (30) geschaltet ist.

10. System (16) nach Anspruch 9, bei dem die Einrichtung zur Begrenzung (34) eine elektromagnetische Primärwicklung (80) für jede der beiden Polaritäten des Gleichstromes aufweist, der zwischen dem Gleichrichter (26) und dem Wechselrichter (30) fließen kann.

11. System (16) nach Anspruch 8 oder 10, bei dem die Einrichtung zur Begrenzung (34) eine in Reihe mit einem Widerstand (86; 203; 303) geschaltete Sekundärwicklung (84; 202; 302), einen Magnetkern (88; 201; 301) zur Kopplung der Sekundärwicklung (84; 202; 302) mit den Primärwicklungen (80; 200; 300) aufweist.

12. Antriebsstrang (10), der dazu eingerichtet ist, mit einem elektrischen Wechselspannungsnetz (12) verbunden zu werden, in der Art, aufweisend eine elektrische Maschine (14) und ein System (16) zur Versorgung der elektrischen Maschine (14) mit Wechselstrom aus dem Wechselspannungsnetz (12), **dadurch gekennzeichnet, dass** das System zur Versorgung (16) einem der vorhergehenden Ansprüche entspricht.

13. Strang (10) nach Anspruch 12, bei dem die elektrische Maschine (14) eine parasitäre Kapazität (Cm) bereitstellt und die Einrichtung zur Verbindung mit der elektrischen Masse (22) einen Kondensator (36) enthält, der eine Kapazität (Cgh) bereitstellt, die größer ist als die parasitäre Kapazität (Cm) der elektrischen Maschine (14).

**EP 2 413 485 B1**

**Claims**

1. System (16) for supplying a load (14) with alternating electric current from an AC electrical network (12), of the type comprising:

   - a device (20) for connecting the AC electrical network (12) to an electrical ground (22),
   - a rectifier (26) connected to the AC electrical network (12), without the presence of a transformer between the AC network (12) and the rectifier (26), the rectifier (26) having controllable electronic switches (48) that are suited to converting the alternating current provided by the electrical network (12) into a direct current delivered at the output of the rectifier (26),
   - a device (28) for controlling the electronic switches (48) of the rectifier (26) that is suited to sending control signals to the respective switches (48),
   - an inverter (30) connected to the output of the rectifier (26) via a direct-current bus (31) and suited to converting the direct current provided by the rectifier (26) into an alternating current delivered to the load (14) connected to its output, and
   - a device (34) for limiting the common mode current that is likely to flow between the network (12) and the load (14),

   **characterized in that** the control device (28) is suited to limiting the absolute value of the voltage (VuM, VvM, VwM) between the electrical ground (22) and a phase (U, V, W) of the alternating current delivered to the load (14), in the absence of overvoltage in the load (14), to a first limit value that is strictly lower than that of the voltage (Vdc) on the direct-current bus (31).

2. System (16) according to Claim 1, in which the first limit value is equal to two thirds of that of the voltage (Vdc) on the direct-current bus (31).

3. System (16) according to Claim 1 or 2, in which the control device (28) is suited to limiting the absolute value of the voltage (VuM, VvM, VwM) between the electrical ground (22) and a phase (U, V, W) of the alternating current delivered to the load (14), in the presence of overvoltages in the load (14), to a second limit value that is equal to 120% of the first limit value.

4. System (16) according to any one of the preceding claims, in which the rectifier (26) exhibits a homopolar voltage (VhAFE), and in which the control device (28) is suited to limiting the absolute value of the homopolar voltage (VhAFE) to a value that is lower than or equal to one sixth of that of the voltage (Vdc) on the direct-current bus (31).

5. System (16) according to any one of the preceding claims, in which the control device (28) has means (64) for calculating the control signals as a function of pulse width modulation, means (66) for modifying the pulse width modulation in accordance with a control law that prohibits at least one switching state of the rectifier (26) in relation to predetermined pulse width modulation in accordance with a control law that allows all the switching states of the rectifier (26), and means (68) for applying the control signals to the switches (48) of the rectifier (26).

6. System (16) according to any one of the preceding claims, in which the limiting device (34) is connected to the input of the rectifier (26).

7. System (16) according to any one of Claims 1 to 5, in which the limiting device (34) is connected to the output of the inverter (30).

8. System (16) according to Claim 6 or 7, in which the limiting device (34) has an electromagnetic winding (200; 300) for each phase of the respective alternating current.

9. System (16) according to any one of Claims 1 to 5, in which the limiting device (34) is connected between the rectifier (26) and the inverter (30).

10. System (16) according to Claim 9, in which the limiting device (34) has a primary electromagnetic winding (80) for each of the two polarities of the direct current that is likely to flow between the rectifier (26) and the inverter (30).

11. System (16) according to Claim 8 or 10, in which the limiting device (34) has a secondary winding (84; 202; 302) connected in series with a resistor (86; 203; 303), and a magnetic core (88; 201; 301) for coupling the secondary winding (84; 202; 302) to the primary windings (80; 200; 300).

12. Drive chain (10) suited to being connected to an AC electrical network (12), of the type comprising an electric machine (14) and a system (16) for supplying the electric machine (14) with alternating electric current from the AC network (12), **characterized in that** the power supply system (16) is in accordance with any one of the preceding claims.

13. Chain (10) according to Claim 12, in which the electric machine (14) exhibits a parasitic capacitance (Cm), and the device for connection to the electrical ground (22) has a capacitor (36) exhibiting a capacitance (Cgh) that is higher than the parasitic capacitance (Cm) of the electric machine (14).

**FIG.1**

**FIG.2**

EP 2 413 485 B1

Eu  Zm  Phase U

Ev  Zm  Phase V

Ew  Zm  Phase W

Cm  22

19

Vw M
Vv M
Vu M
22

Vu0 INV
Vv0 INV
Vw0 INV

72

V0N'
22

45

Vu0 AFE
Vv0 AFE
Vw0 AFE

Vw AFE
Vv AFE
Vu AFE
22

$Z_{AFE}$  Phase U
$Z_{AFE}$  Phase V
$Z_{AFE}$  Phase W

Vu_net
Vv_net
Vw_net

18

22

**FIG.3**

FIG.4

EP 2 413 485 B1

## FIG.5

## FIG.6

FIG.7

**FIG.8**

FIG.9

**EP 2 413 485 B1**

## RÉFÉRENCES CITÉES DANS LA DESCRIPTION

**Documents brevets cités dans la description**

- US 20070211501 A1

- EP 2157683 A